# EUROPEAN PATENT APPLICATION

(11) **EP 0 811 419 A2**
(43) Date of publication of application: **10.12.1997**
(21) Application number: 97109233.3
(22) Date of filing: 06.06.1997
(51) Int. Cl.: B01D 53/94

(54) **Catalytic apparatus purifying exhaust gas emitted from diesel engine**

(30) Priority: 07.06.1996 JP 145672/96; 16.05.1997 JP 126933/97
(71) Applicant: TOYOTA JIDOSHA KABUSHIKI KAISHA, Aichi-ken (JP)
(72) Inventor: Hachisuka, Ichiro, Toyota-shi, Aichi-ken (JP); Nagami, Tetsuo, Toyota-shi, Aichi-ken (JP)
(74) Representative: Pellmann, Hans-Bernd, Dipl.-Ing.

(57) **Abstract**

A catalytic apparatus for purifying an exhaust gas emitted from a diesel engine includes a first catalyst, and a second catalyst. The first catalyst is disposed on an upstream side in an exhaust system of a diesel engine, has a predetermined oxidizing activity, can crack SOF (i.e., soluble organic fractions) contained in an exhaust gas emitted from the diesel engine, and is less likely to oxidize SO₂. The second catalyst is disposed on a downstream side with respect to the first catalyst in the exhaust system, has an oxidizing activity higher than that of the first catalyst, and can oxidize and purify the SOF cracked to low-molecular-weight substances by the first catalyst. The SOF are cracked by the first catalyst so that they are likely to be oxidized. Accordingly, the SOF can be oxidized and purified by the second catalyst. Whilst, SO₂ is not oxidized by the first catalyst. Consequently, SO₂ is less likely to be oxidized by the second catalyst, because the temperature of the exhaust gas is decreased. Therefore, sulfates can be inhibited from generating.

## Description

### BACKGROUND OF THE INVENTION

### Field of the Invention

The present invention relates to a catalytic apparatus for purifying an exhaust gas emitted from a diesel engine. It is possible for the catalytic apparatus not only to oxidize and purify hydrocarbons (hereinafter abbreviated to as "HC") and soluble organic fractions (hereinafter abbreviated to as "SOF") included in an exhaust gas emitted from a diesel engine, but also to minimize an emission of diesel particulates.

### Description of the Related Art

Concerning gasoline engines, the harmful components included in the exhaust gases emitted therefrom have been reduced steadily, because of severe regulations to control the exhaust gases, and because of the development of technologies to comply with the regulations.

On the other hand, the exhaust gases emitted from diesel engines have been controlled under less stricter regulations than those emitted from gasoline engines, and the technologies for processing the exhaust gases emitted from diesel engines have been developed slower so far than those for the exhaust gases emitted from gasoline engines, because of the special circumstances: namely; diesel engines emit the harmful substances mainly as particulates. Thus, there has been a long-felt need for developing a catalyst which can securely purify the exhaust gases emitted from diesel engines.

As conventional apparatuses developed so far for purifying the exhaust gases emitted from diesel engines, there have been known an apparatus using a trapping element, and an open type SOF cracking catalyst The apparatus using a trapping element can be classified into an apparatus free from a catalyst, and an apparatus provided with a catalyst.

The conventional trapping type apparatus captures the diesel particulates included in exhaust gases emitted from diesel engines in order to inhibit them from being emitted, and is especially effective to the exhaust gases of high dry-soot content. However, the conventional trapping type apparatus requires a recycling apparatus for burning the captured diesel particulates. Accordingly, in view of actual application, there still remain the following problems associated with the conventional trapping type apparatus: namely; its DPE (i.e., diesel particulates filter) is cracked during the recycling operation; its DPE is clogged by ashes; and the conventional trapping type apparatus itself complicates an exhaust system inevitably.

Whilst, one of the open type SOF cracking catalysts is disclosed in Japanese Unexamined Patent Publication (KOKAI) No. 3-38,255, for example. As set forth in the publication, similarly to catalysts for purifying exhaust gases emitted from gasoline engines, a catalyst is utilized which comprises a catalyst carrier layer formed of activated alumina, etc., and a platinum-group catalyst ingredient, etc., loaded on the catalyst carrier layer. The open type SOF cracking catalyst oxidizes and decomposes SOF together with CO and HC, thereby purifying an exhaust gas emitted from a diesel engine. This open type SOF cracking catalyst has a disadvantage in that it removes the dry soot with a low removing rate. However, the quantity of dry soot can be reduced by improving diesel engines or fuels themselves. In addition, engineers have been studying the open type SOF cracking catalyst intensively so far, because of a big advantage: namely; no recycling apparatus is required of the open type SOF cracking catalyst. Thus, a further engineering improvement is longed for the open type SOF cracking catalyst.

Although the open type SOF cracking catalyst can efficiently decompose SOF at elevated temperatures ,it suffers from a disadvantage in that its catalyst ingredient exhibits a poor catalytic activity at low temperatures to show deteriorated SOF purifying performance. When an engine is started or operated idly where the temperature of an exhaust gas is low, SOF are not decomposed but turned into soot. Consequently, there arises a phenomenon that the resulting soot deposits in the honeycomb-shaped cellular passages of the catalyst support of the open type SOF cracking catalyst. As a result, there arises a disadvantage in that the open type SOF cracking catalyst is clogged by the deposited soot to suffer from deteriorated catalytic performance.

Moreover, hydrocarbons, such as light oil, and the like, are added to exhaust gases in order to reduce and purify NOₓ included in the exhaust gases. However, the reduction reaction of NOₓ is relatively less likely to take place in exhaust gases emitted from diesel engines, because oxygen is included in a greater amount in the exhaust gases. Accordingly, the emusion of SOF may be increased occasionally, because the hydrocarbons, which have not taken part in the reduction reaction of NOₓ, are emitted as they are.

In addition, the open type SOF cracking catalyst suffers from another problem in that the emission of particulates may be enlarged: namely; SO₂ is oxidized to produce SO₃ or SO₄ in a high-temperature range, and the resulting SO₃ or SO₄ is turned into sulfates to increase the emission of particulates. This drawback results from the fact that the SO₂ is not measured as particulates, but SO₃ or SO₄ is measured as particulates. Especially, in the exhaust gases emitted from diesel engines, gaseous oxygen exists in a sufficient amount so that the oxidation of SO₂ is likely to take place.

In order to solve the problems associated with the conventional apparatuses for purifying the exhaust gases emitted from diesel engines, the applicant of the present invention proposed a novel catalyst for purifying an exhaust gas emitted from a diesel engine in Japanese Unexamined Patent Publication (KOKAI) No. 6-198,181. The catalyst includes Pt which is loaded on an upstream side in an exhaust gas flow, and Pd which is loaded on a downstream side in the exhaust gas flow.

In the exhaust gas, Pt is loaded on the upstream side so that it oxidizes and purifies HC and SOF when the temperature of the exhaust gas is as low as about 300 °C. When the exhaust gas has such a low temperature, the oxidation of SO₂ does not arise. Moreover, Pd of lower oxidizing activity is loaded on the downstream side. As a result, even when the exhaust gas is heated to a high temperature by the heat resulting from the catalytic action, and when it is flowed to the downstream side, the oxidation of SO₂ does not occur, and accordingly the sulfates are inhibited from generating unless the temperature of the exhaust gas is about 450 °C or more on the downstream side.

However, in the novel catalyst, Pt, loaded on the upstream side, oxides SO₂ when the temperature of the exhaust gas is elevated to a high temperature. Consequently, the novel catalyst suffers from a drawback in that the sulfates are emitted eventually.

Moreover, it is difficult for the novel catalyst to completely oxide and purify SOF when the temperature of the exhaust gas is low, for example, when a diesel engine is started or when it is operated idly. Accordingly, excessive SOF are adsorbed on a catalyst support formed of alumina, etc., on the upstream side. Then, the adsorbed SOF are eliminated from the catalyst support to flow to the downstream side when the temperature of the exhaust gas is elevated to a high temperature. Since Pd is of lower oxidizing activity, SOF are subjected to incomplete combustion. Thus, SOF are emitted in an incompletely oxidized state, and released in air as white fumes.

In addition, when the novel catalyst is installed to an upstream-side of an exhaust system which is adjacent to a diesel engine, an exhaust gas of elevated temperature is flowed into the novel catalyst. Accordingly, Pt oxidizes SO₂ to generate the sulfates. On the other hand, when the novel catalyst is installed to a downstream-side of an exhaust system which is away from a diesel engine, it is difficult for the novel catalyst to purify SOF.

Thus, the novel catalyst disclosed in the publication suffers from a drawback in that it offers a narrow temperature range where both of the SOF purification and the sulfate-generation control can be carried out satisfactorily.

### SUMMARY OF THE INVENTION

It is therefore an object of the present to provide a catalytic apparatus for purifying an exhaust gas emitted from a diesel engine, catalytic apparatus which can exhibit good performance in both of the SOF purification and the sulfate-generation control is a wide temperature range.

A catalytic apparatus for purifying an exhaust gas emitted from a diesel engine can carry out the aforementioned object, and comprises:
a first catalyst disposed on a upstream side in an exhaust system of a diesel engine, having a predetermined oxidizing activity, being capable of cracking soluble organic fractions (hereinafter abbreviated to as "SOF") included in an exhaust gas emitted from the diesel engine, and being less likely to oxidize SO₂; and
a second catalyst disposed on a downstream side with respect to the first catalyst in the exhaust system, having an oxidizing activity higher than that of the first catalyst, and being capable of oxidizing and purifying the SOF cracked to low-molecular-weight substances by the first catalyst.

In the present catalytic apparatus, the exhaust gas emitted from a diesel engine is first flowed into the first catalyst. In the first catalyst, SOF included in the exhaust gas is turned into low-molecular-weight substances by cracking, and is then flowed to a downstream side. Even when the diesel engine is operated idly or at a low speed, the temperature of the exhaust gas introduced into the first catalyst can be relatively high, because the first catalyst is disposed on an upstream side in an exhaust system of the diesel engine. Consequently, the temperature of the exhaust gas is likely to reach the cracking temperature of SOF. Moreover, the first catalyst is less likely to oxidize SO₂. Accordingly, even when the temperature of the exhaust gas is high, SO₂ included in the exhaust gas is little oxidized, and it is flowed to a downstream side as it is.

Then, the second catalyst oxidizes the low-molecular-weight substances, which have been cracked by the first catalyst, and purifies them by turning them into H₂O and CO₂. SOF are likely to be oxidized and purified, because they have been turned into low-molecular-weight substances. Consequently, SOF are purified with high conversion. On the other hand, the temperature of the exhaust gas introduced into the second catalyst can be low, because the second catalyst is disposed on a downstream side in the exhaust system of the diesel engine. For instance, when the exhaust system of the diesel engine is prolonged by 1 m, the temperature of the exhaust gas is dropped by 100 °C approximately. Accordingly, even when the second catalyst is of high oxidizing activity, SO₂ is less likely to be oxidized. As a result, the sulfates can be inhibited from generating.

In accordance with these operations, the present catalytic apparatus can offer a wide temperature range where both of the SOF purification and the sulfate-generation control can be carried out satisfactorily.

As having described so far, the present catalytic apparatus can exhibit extraordinary performance in both of the SOF purification and the sulfate-generation control in a wide temperature range by appropriately designing the disposition of the first and second catalysts. Therefore, the present catalytic apparatus can satisfactorily purify the exhaust gases emitted from diesel engines in the wide temperature range.

### BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure:
Fig. 1 is a block diagram for schematically illustrating an arrangement of a First Preferred Embodiment of a catalytic apparatus according to the present invention;
Fig. 2 is a graph for showing the composition (or molecular weight distributions) of SOF included in an exhaust gas which was introduced into a first catalyst of the First Preferred Embodiment of the present catalytic apparatus, and the composition of SOF included in an exhaust gas which was emitted therefrom;
Fig. 3 is a bar chart for showing the emission of particulate materials (hereinafter abbreviated to as "PM") included in an exhaust gas which was purified by the First Preferred Embodiment, a Second Preferred Embodiment and Comparative Example Nos. 1 through 4;
Fig. 4 is a bar chart for showing the emission of HC and CO included in an exhaust gas which was purified by the First Preferred Embodiment, the Second Preferred Embodiment and Comparative Example Nos. 1 through 4;
Fig. 5 is a gas chromatogram for showing substances having a number of carbon atoms from 2 to 5 and included in a exhaust gas which was emitted from a first catalyst of the present catalytic apparatus of the Second Preferred Embodiment when n-C₁₆H₃₄ (i.e., n-hexadecane) was flowed therethrough;
Fig. 6 is a gas chromatogram for showing substances having a number of carbon atoms from 6 to 10 and included in an exhaust gas which was emitted from a first catalyst of the present catalytic apparatus of the Second Preferred Embodiment when n-C₁₆H₃₄ was flowed therethrough;
Fig. 7 is a gas chromatogram for showing substances having a number of carbon atoms from 2 to 5 and included in an exhaust gas which was emitted from a first catalyst of a comparative catalytic apparatus of Comparative Example No. 1 when n-C₁₆H₃₄ was flowed therethrough; and
Fig. 8 is a gas chromatogram for showing substances having a number of carbon atoms from 6 to 10 and included in an exhaust gas which was emitted from a first catalyst of a comparative catalytic apparatus of Comparative Example No. 1 when n-C₁₆H₃₄ was flowed therethrough.

### DETAILED DESCRIPTION OF THE PREFERRED EMBODIMENTS

Having generally described the present invention, a further understanding can be obtained by reference to the specific preferred embodiments which are provided herein for the purpose of illustration only and not intended to limit the scope of the appended claims.

In the present catalytic apparatus, the first catalyst can be one which is capable of cracking SOF included in a exhaust gas emitted from a diesel engine, and which is less likely to oxidize SO₂. For example, the first catalyst can include a catalyst support which is formed of the following components: SiO₂, a mixture of SiO₂ and Al₂O₃, a composite oxide of SiO₂ and Al₂O₃, a mixture of SiO₂ and MgO, a composite oxide of SiO₂ and MgO, a zeolite having a cracking capability, Fe₂O₃, Fe₃O₄, CeO₂, a mixture of CeO₂ and ZrO₂, a composite oxide CeO₂ and ZrO₂, a SO₄-ZrO₂ super strong acid, a WO₃-ZrO₂ super strong acid, a WO₃-SnO₂ super strong acid, a WO₃-TiO₂ super strong acid, a WO₃-Fe₂O₃ super strong acid, and an MoO₃-ZrO₂ super strong acid. The zeolite having a cracking capability can be a type Y zeolite, for example, USY (ultra stabilized Y-type zeolite (Trade Mark of TOSO Corp.)) 200 produced by TOSO Corp. Note that these components can be employed independently to constitute the catalyst support, or combinations of two or more of the components can be employed to constitute the catalyst support. Also note that the first catalyst can be constituted by the catalyst support alone, or it can be constituted by further loading a catalyst ingredient on the catalyst support.

The first catalyst can employ one or more of the following catalyst ingredients: Pt, Rh, and Pd. Among them, Pd is preferred especially, because it is of low oxidizing activity. It is further preferable to load Pd in an amount of from 0.01 to 5 grams, furthermore preferable from 0.1 to 2.0 grams, with respect to 1 liter of the catalyst support. Moreover, even when the catalyst ingredient is Pt or Rh, and when it is loaded in an amount smaller than the catalyst ingredient loaded on the subsequent second catalyst, the oxidizing activity of Pt or Rh can be kept low so that SO₂ can be inhibited from oxidizing. Note that the loading amount of Pt or Rh falls preferably in a range of from 0.01 to 5 grams, furthermore preferable from 0.1 to 2.0 grams, with respect to 1 liter of the catalyst support.

In the present catalytic apparatus, the second catalyst can be oxidizing catalysts which have been used conventionally. For instance, a catalyst support of the second catalyst can be exemplified by the following components: SiO₂, Al₂O₃, TiO₂, ZrO₂, CeO₂, Fe₂O₃, and Fe₃O₄. Note these components can be employed independently to constitute the catalyst support, or combinations of two or more of the components can be employed to constitute the catalyst support.

In the second catalyst, for example, the following catalyst ingredients can be loaded on the catalyst support: Pt, Rh, and Pd. Note that these catalyst ingredients can be loaded independently or combinations of two or more of the catalyst ingredients can be loaded as well. Among them, Pt is preferred especially, because it is of high oxidizing activity. It is further preferable to load Pt in an amount of from 0.01 to 5 grams, furthermore preferable from 0.1 to 2.0 grams, with respect to 1 liter of the catalyst support. Note that, when a catalyst ingredient is loaded on the first catalyst, the second catalyst employs a catalyst ingredient whose oxidizing activity is higher than that of the catalyst ingredient loaded on the first catalyst. Alternatively, when a catalyst ingredient of substantially identical oxidizing activity is loaded on both of the first and second catalysts, it is preferred to load the catalyst ingredient on the second catalyst in an amount greater that of the catalyst ingredient loaded on the first catalyst, thereby adjusting the oxidizing activity of the second catalyst higher than that of the first catalyst. In this instance, it is especially preferable to control the loading amount of the catalyst ingredient more on the second catalyst in a range of from 0.1 to 5 grams, furthermore preferable from 0.5 to 2.0 grams, with respect to 1 liter of the catalyst support.

The first catalyst can preferably be positioned adjacent to a diesel engine as close as possible, for example, immediately below an exhaust manifold of a diesel engine. Whilst, the second catalyst can preferably be positioned away from a diesel engine as far as possible, but is disposed within an area where the temperature of the exhaust gas is held in such a range that permits the catalyst ingredient loaded on the second catalyst to exhibit the oxidizing activity.

Note that the present catalytic apparatus can be applied to an exhaust system in which hydrocarbons, such as light oil, and the like, are added to an exhaust gas. In this instance, NOₓ is reduced simultaneously by the first catalyst with the cracking of SOF. In addition, at the second catalyst, SOF, which have been turned into low-molecular-weight substances, are likely to react with residual NOₓ. Consequently, not only NOₓ can be purified with improved performance, but also SOF can be purified with enhanced conversion.

The present catalytic apparatus will be hereinafter described in detail with reference to preferred embodiments and comparative examples. Table 1 below summarizes the arrangements of catalytic apparatuses of preferred embodiments and comparative examples.

**TABLE 1**

| | 1st Catalyst on Upstream Side | | 2nd Catalyst on Downstream Side | |
|---|---|---|---|---|
| | Catalyst Ingredient | Catalyst Support | Catalyst Ingredient | Catalyst Support |
| 1st Pref. Embodiment | Pd (0.025 g/L) | SiO₂-Al₂O₃ | Pt (1.0 g/L) | SiO₂ |
| 2nd Pref. Embodiment | Pt (0.1 g/L) | USY200 | Pt (1.5 g/L) | TiO₂ |
| Comparative Ex. No. 1 | Pt (1.5 g/L) | SiO₂ | none | none |
| Comparative Ex. No. 2 | Pd (0.025 g/L) | SiO₂-Al₂O₃ | none | none |
| Comparative Ex. No. 3 | none | none | none | none |
| Comparative Ex. No. 4 | Pt (1.0 g/L) | SiO₂ | Pd (0.025 g/L) | SiO₂ |

### First Preferred Embodiment

A honeycomb-shaped support substrate was prepared. The support substrate had a volume of 1.7 L, and was formed of cordierite. A coating layer was formed on the support substrate in an amount of 100 g with respect to 1 L of the support substrate, thereby making a honeycomb-shaped catalyst support. The coating layer included an alumina powder in an amount of 10% by weight, and a silica powder in an amount of 90% by weight. The resulting honeycomb-shaped catalyst support with the coating layer formed thereon was immersed into an aqueous solution of palladium nitrate having a predetermined concentration of palladium nitrate. Thereafter, the honeycomb-shaped catalyst was taken out of the aqueous solution, and was blown off to remove excessive water. Finally, the honeycomb-shaped catalyst support was calcinated to load Pd on the coating layer, thereby completing a first catalyst. Pd was loaded on the honeycomb-shaped catalyst support in an amount of 0.025 grams with respect to 1 L of the honeycomb-shaped catalyst support.

Whilst, another honeycomb-shaped support substrate was prepared. Likewise, the support substrate had a volume of 1.7 L, and was formed of cordierite. A coating layer was formed on the support substrate in an amount of 100g with respect to 1 L of the support substrate, thereby making a honeycomb-shaped catalyst support. The coating layer included a silica powder in a amount of 100% by weight The resulting honeycomb-shaped catalyst support with the coating layer formed thereon was immersed into an aqueous solution of dinitrodiammine platinum nitrate having a predetermined concentration of dinitrodiammine platinum nitrate. Thereafter, the honeycomb-shaped catalyst was taken out of the aqueous solution, and was blown off to remove excessive water. Finally, the honeycomb-shaped catalyst support was calcinated to load Pt on the coating layer, thereby completing a second catalyst. Pt was loaded on the honeycomb-shaped catalyst support in an amount of 1.0 gram with respect to 1 L of the honeycomb-shaped catalyst support.

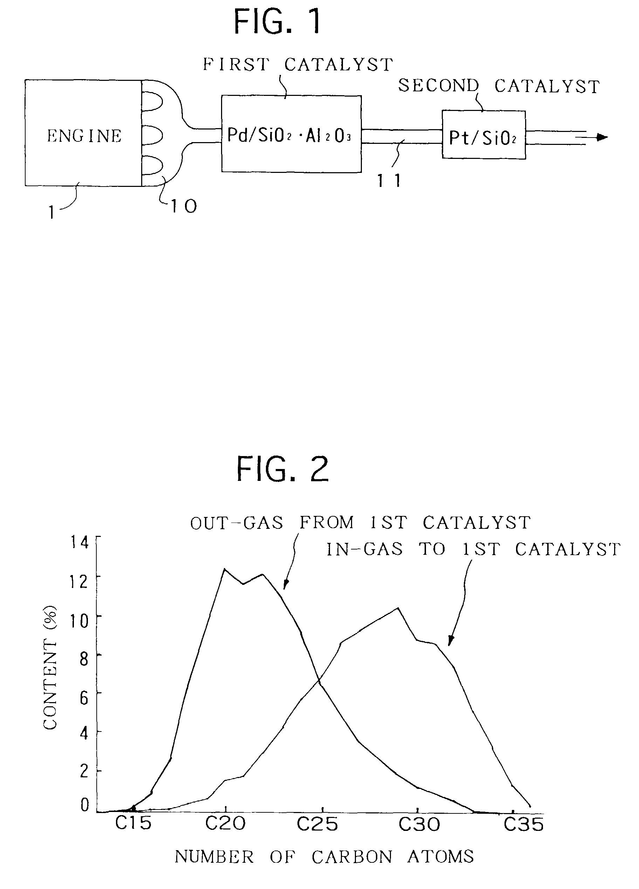

Then, as illustrated in Fig. 1, the resultant first catalyst was disposed immediately below an exhaust manifold 10 of a diesel engine 1, and the resultant second catalyst was disposed on a downstream side away from the first catalyst by 1,200 mm in an exhaust system. The diesel engine 1 had a displacement of 2.6 L.

The diesel engine 1 was operated at 2,000 rpm under a load of 70 Nm. Note that this operating condition of the diesel engine 1 is referred to as a new EC (European Community) mode. Under the operating condition, an exhaust gas introduced into the first catalyst, and an exhaust gas emitted therefrom were analyzed with a gas chromatograph in order to determine the compositions of SOF included in the exhaust gases. The results of the analysis are illustrated in Fig. 2 as a molecular-weight-distribution diagram. For substances having a specific number of carbon atoms, the contents of the substances included in SOF were calculated so as to illustrate the molecular-weight-distribution diagram.

It is evident from Fig. 2 that SOF, which were included in the exhaust gas at the outlet of the first catalyst, were turned into low-molecular-weight substances with respect to SOF, which were included in the exhaust gas at the inlet of the first catalyst Thus, the first catalyst could apparently crack SOF, which were included in the exhaust gas at the inlet of the first catalyst.

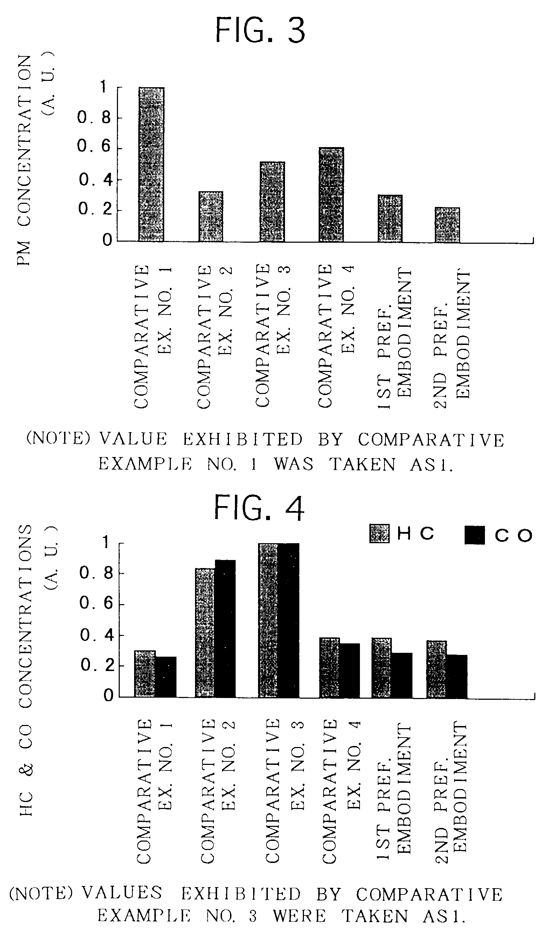

Moreover, an exhaust gas emitted from the second catalyst was examined for a concentration of particulate materials (hereinafter abbreviated to as "PM"), which were included in the exhaust gas at the outlet of the second catalyst. Note that PM were diluted by a dilution tunnel, and were thereafter captured by using a filter to quantitatively determine the concentration. Fig. 3 illustrates the results of the examination as a ratio with respect to the concentration of PM included in the exhaust gas at the outlet of a comparative catalytic apparatus of Comparative Example No. 1 described later.

In addition, the exhaust gas emitted from the second catalyst was further examined by using an exhaust-gas analyzer for concentrations of HC and CO, which were included in the exhaust gas at the outlet of the second catalyst. Fig. 4 illustrates the results of the examination as ratios with respect to the concentrations of HC and CO, which were included in the exhaust gas at the outlet of a comparative catalytic apparatus of Comparative Example No. 3 described later. Note that, in Figs. 3 and 4, the concentrations are expressed by arbitrary units (A. U.).

### Second Preferred Embodiment

A honeycomb-shaped support substrate was prepared. The support substrate had a volume of 1.7 L, and was formed of cordierite. A coating layer was formed on the support substrate in an amount of 100 g with respect to 1 L of the support substrate, thereby making a honeycomb-shaped catalyst support. The coating layer included a type Y zeolite (e.g., "USY200" produced by TOSO Corp.) which was comprised of SiO₂ and Al₂O₃ in a mixing ratio of 200 : 1 (i.e., SiO₂/Al₂O₃ = 200) by mole. The resulting honeycomb-shaped catalyst support with the coating layer armed thereon was immersed into an aqueous solution of dinitrodiammine platinum nitrate having a predetermined concentration of dinitrodiammine platinum nitrate. Thereafter, the honeycomb-shaped catalyst was taken out of the aqueous solution, and was blown off to remove excessive water. Finally, the honeycomb-shaped catalyst support was calcinated to load Pt on the coating layer, thereby completing a first catalyst. Pt was loaded on the honeycomb-shaped catalyst support in an amount of 0.1 gram with respect to 1 L of the honeycomb-shaped catalyst support.

Whilst, another honeycomb-shaped support substrate was prepared. Likewise, the support substrate had a volume of 1.7 L, and was formed of cordierite. A coating layer was formed on the support substrate in an amount of 100 g with respect to 1 L of the support substrate, thereby making a honeycomb-shaped catalyst support. The coating layer included a titania powder in an amount of 100% by weight. The resulting honeycomb-shaped catalyst support with the coating layer formed thereon was immersed into an aqueous solution of dinitrodiammine platinum nitrate having a predetermined concentration of dinitrodiammine platinum nitrate. Thereafter, the honeycomb-shaped catalyst was taken out of the aqueous solution, and was blown off to remove excessive water. Finally, the honeycomb-shaped catalyst support was calcinated to load Pt on the coating layer, thereby completing a second catalyst. Pt was loaded on the honeycomb-shaped catalyst support in an amount of 1.5 grams with respect to 1 L of the honeycomb-shaped catalyst support.

The resulting present catalytic apparatus of the Second Preferred Embodiment was examined for the concentrations of PM, HC and CO in the same manner as the First Preferred Embodiment. Figs. 3 and 4 illustrate the results of the examination.

### Comparative Example No. 1

A comparative catalytic apparatus (i.e., Comparative Example No. 1) was prepared in the same manner as the First Preferred Embodiment, but with the following exceptions: namely; a single catalyst was prepared by loading Pt thereon in an amount of 1.5 grams in the same manner as the second catalyst of the First Preferred Embodiment; the resulting single catalyst was disposed at the position where the first catalyst of the First Preferred Embodiment was disposed, and no catalyst was disposed on a downstream side with respect to the thus disposed single catalyst.

The resulting comparative catalytic apparatus of Comparative Example No. 1 was examined for the concentrations of PM, HC and CO in the same manner as the First Preferred Embodiment. Figs. 3 and 4 illustrate the results of the examination.

### Comparative Example No. 2

A comparative catalytic apparatus (i.e., Comparative Example No. 2) was prepared in the same manner as the First Preferred Embodiment, but with the following exceptions: namely; only the first catalyst of the First Preferred Embodiment was disposed on the upstream side; and the second catalyst thereof was not disposed.

The resulting comparative catalytic apparatus of Comparative Example No. 2 was examined for the concentrations of PM, HC and CO in the same manner as the First Preferred Embodiment. Figs. 3 and 4 illustrate the results of the examination.

### Comparative Example No. 3

A comparative catalytic apparatus (i.e., Comparative Example No. 3) was prepared in the same manner as the First Preferred Embodiment, but with the following exception: namely; the first catalyst and second catalyst of the First Preferred Embodiment were not used. Hence, the exhaust gas emitted from the diesel engine 1 was emitted to the outside as it is.

The exhaust gas emitted from the outlet port of the exhaust system was examined for the concentrations of PM, HC and CO in the same manner as the First Preferred Embodiment. Figs. 3 and 4 illustrate the results of the examination.

### Comparative Example No. 4

A comparative catalytic apparatus (i.e., Comparative Example No. 4) was prepared in the same manner as the First Preferred Embodiment, but with the following exceptions: namely; the first catalyst of the First Preferred Embodiment was disposed on the downstream side; and the second catalyst thereof was disposed on the upstream side. Thus, in Comparative Example No. 4, a first catalyst and a second catalyst were disposed at reversed positions with respect to those of the First Preferred Embodiment. The resulting comparative catalytic apparatus of Comparative Example No. 4 was examined for the concentrations of PM, HC and CO in the same manner as the First Preferred Embodiment. Figs. 3 and 4 illustrate the results of the examination.

### Evaluation

It is understood from Fig. 4 that the exhaust gas purified by Comparative Example No. 1 included HC and CO in a less concentration than the exhaust gas emitted from Comparative Example No. 3. Thus, it was verified that HC and CO could be efficiently oxidized and purified by only utilizing the second catalyst of the First Preferred Embodiment in which Pt was loaded on the SiO₂ catalyst support. However, it is seen from Fig. 3 that the exhaust gas purified by Comparative Example No. 1 involved PM in a greater concentration than the exhaust gas emitted from Comparative Example No. 3. Therefore, it was discovered that the sulfates were inevitably produced by only employing the second catalyst of the First Preferred Embodiment.

Concerning Comparative Example No. 2, it is appreciated from Fig. 3 that the exhaust gas purified by Comparative Example No. 2 contained PM in a less concentration than the exhaust gas emitted from Comparative Example No. 3. Hence, it was apparent that the sulfates were inhibited from generating by only employing the first catalyst of the First Preferred Embodiment in which Pd was loaded on the SiO₂-Al₂O₃ catalyst support. However, it is understood from Fig. 4 that Comparative Example No. 2 could reduce HC and CO, included in the exhaust gas, by a trivial amount with respect to the concentration of HC and CO, included in the exhaust gas emitted from Comparative Example No. 3. This phenomena imply that SO₂ can be kept from oxidizing by utilising the second catalyst of the First Preferred Embodiment alone, but HC and CO cannot be readily oxidized and purified thereby.

On the contrary, it is appreciated from Figs. 3 and 4 that all of SOF, HC and CO could be efficiently purified by employing the present catalytic apparatus of the First Preferred Embodiment, and simultaneously the sulfates could be inhibited from generating thereby. It is evident that the advantageous effects are benefited by disposing the first catalyst and the second catalyst in this order in the exhaust system.

In addition, it is seen from Figs. 3 and 4 that the catalytic apparatus of the Second Preferred Embodiment exhibited good purifying performance similarly to that of the First Preferred Embodiment. Note that the catalytic apparatus of the Second Preferred Embodiment employed the following arrangements: namely: Pt was loaded on both of the first and second catalysts, but was loaded on the second catalyst in a greater amount than on the first catalyst in order to enhance the oxidizing activity of the second catalyst; and the first catalyst utilized the catalyst support formed of zeolite which not only exhibited a good adsorbing ability to SOF but also had cracking performance. It is understood that, due to these arrangements, the catalytic apparatus of the Second Preferred Embodiment could purify all of SOF, HC and CO efficiently, and could simultaneously inhibit the sulfates from generating.

Note that, in the catalytic apparatus of the Second Preferred Embodiment, Pt was loaded on the first catalyst in a trace amount in order to inhibit the first catalyst from deteriorating by being poisoned by HC and SOF (or by coking). At an initial stage of operation, it was verified that the catalytic apparatus of the Second Preferred Embodiment could likewise exhibit the aforementioned beneficial performance even if Pt was not loaded on the first catalyst.

On the other hand, the comparative catalytic apparatus of Comparative Example No. 4 included the first catalyst and the second catalyst which were arranged completely reversely with respect to those of the First Preferred Embodiment. Therefore, Comparative Example No. 4 produced the sulfates in a large amount, and purified HC and CO insufficiently.

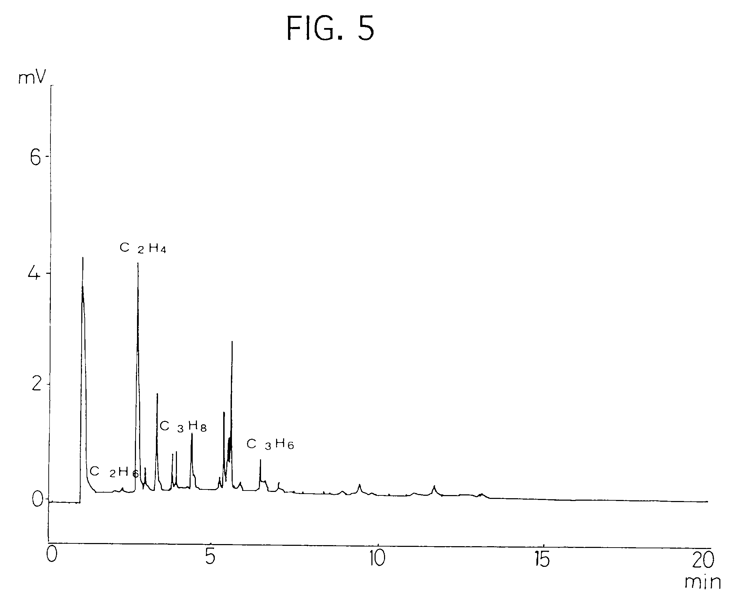

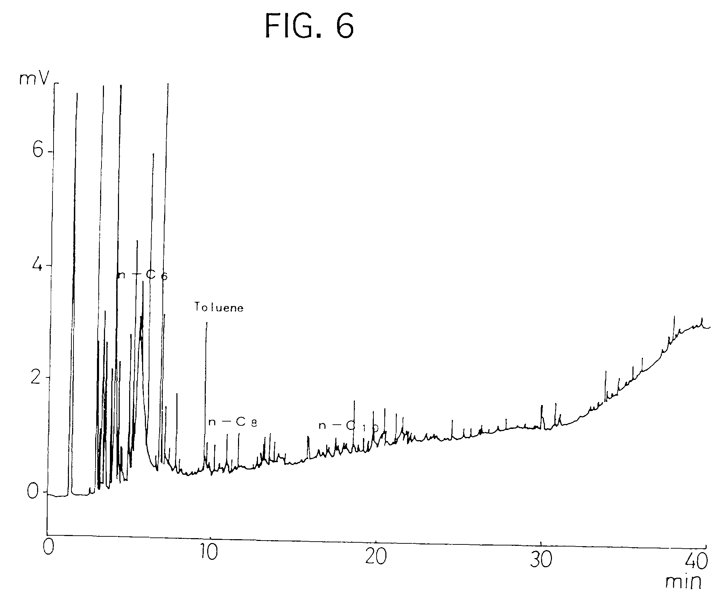

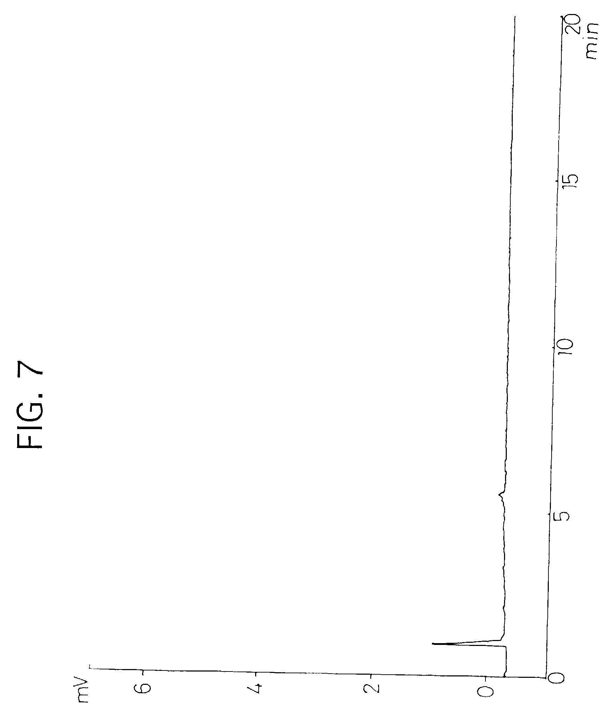

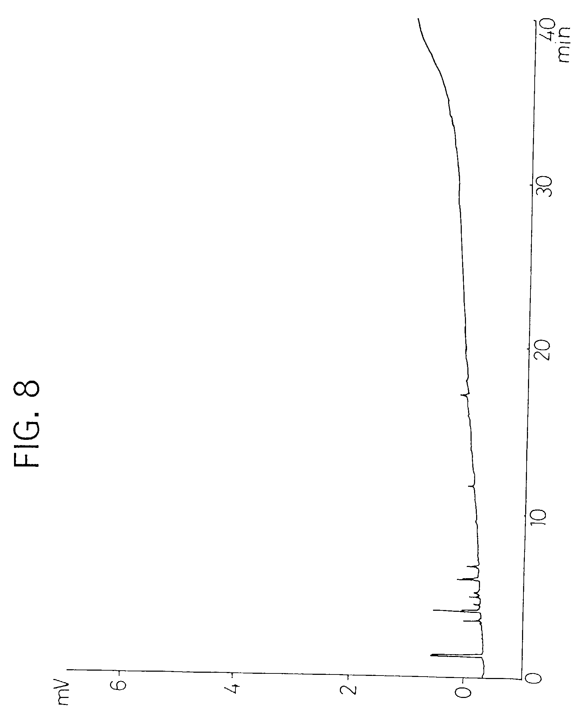

Finally, the catalytic apparatus of the Second Preferred Embodiment, and the comparative catalytic apparatus of Comparative Example No. 1 were examined for their SOF cracking abilities. For instance, n-C₁₆H₃₄ (n-hexedecane) was flowed through their first catalysts only in an amount of 40 mg at 150 °C in a diesel exhaust-gas atmosphere. The diesel exhaust-gas atmosphere herein means that the atmosphere included O₂ in an amount of 10% by volume, and the balance of N₂. The resulting substances whose number of carbon atoms was 10 or more were removed by cold trapping, and the residual gaseous compounds were collected with a gas pack. The components of the gaseous compounds collected in the gas pack were analyzed with a gas chromatograph. Figs. 5 and 7 show a gas chromatogram on the components which had a number of carbon atoms from 2 to 5, and which were included in the exhaust gas emitted from the first catalyst of the Second Preferred Embodiment and Comparative Example No. 1, respectively. Figs. 6 and 8 show a gas chromatogram on the components which had a number of carbon atoms from 6 to 10, and which were included in the exhaust gas emitted from the first catalyst of the Second Preferred Embodiment and Comparative Example No. 1, respectively.

It is apparent from Figs. 5 through 8 that n-C₁₆H₃₄ was little cracked by the first catalyst of the comparative catalytic apparatus of Comparative Example No. 1. On the contrary, n-C₁₆H₃₄ was cracked by the first catalyst of the catalytic apparatus of the Second Preferred Embodiment to low-molecular-weight compounds, such as C₂H₄, C₂H₆, C₃H₈, C₃H₆, n-C₆H₁₄, toluene, xylene, etc.

Having now fully described the present invention, it will be apparent to one of ordinary skill in the art that many changes and modifications can be made thereto without departing from the spirit or scope of the present invention as set forth herein including the appended claims.

A catalytic apparatus for purifying an exhaust gas emitted from a diesel engine includes a first catalyst, and a second catalyst. The first catalyst is disposed on an upstream side in an exhaust system of a diesel engine, has a predetermined oxidizing activity, can crack SOF (i.e., soluble organic fractions) contained in an exhaust gas emitted from the diesel engine, and is less likely to oxidize SO₂. The second catalyst is disposed on a downstream side with respect to the first catalyst in the exhaust system, has an oxidizing activity higher than that of the first catalyst, and can oxidize and purify the SOF cracked to low-molecular-weight substances by the first catalyst. The SOF are cracked by the first catalyst so that they are likely to be oxidized. Accordingly, the SOF can be oxidized and purified by the second catalyst. Whilst, SO₂ is not oxidized by the first catalyst. Consequently, SO₂ is less likely to be oxidized by the second catalyst, because the temperature of the exhaust gas is decreased. Therefore, sulfates can be inhibited from generating.

## Claims

1. A catalytic apparatus for purifying an exhaust gas emitted from a diesel engine, comprising:
a first catalyst disposed on an upstream side in an exhaust system of a diesel engine, having a predetermined oxidizing activity, being capable of cracking soluble organic fractions (hereinafter abbreviated to as "SOF") included in an exhaust gas emitted from the diesel engine, and being less likely to oxidize SO₂; and
a second catalyst disposed on a downstream side with respect to said first catalyst in the exhaust system, having an oxidizing activity higher than that of said first catalyst, and being capable of oxidizing and purifying the SOF cracked to low-molecular-weight substances by said first catalyst.

2. The catalytic apparatus according to Claim 1, wherein said first catalyst includes a catalyst support formed of at least one component which is selected from the group consisting of SiO₂, a mixture of SiO₂ and Al₂O₃, a composite oxide of SiO₂ and Al₂O₃, a mixture of SiO₂ and MgO, a composite oxide of SiO₂ and MgO, a zeolite having a cracking capability, Fe₂O₃, Fe₃O₄, CeO₂, a mixture of CeO₂ and ZrO₂, a composite oxide of CeO₂ and ZrO₂, an SO₄-ZrO₂ super strong acid, a WO₃-ZrO₂ super strong acid, a WO₃-SnO₂ super strong acid, a WO₃-TiO₂ super strong acid, a WO₃-Fe₂O₃ super strong acid, and an MoO₃-ZrO₂ super strong acid.

3. The catalytic apparatus according to Claim 2, wherein said component is at least one member which is selected from the group consisting of a mixture of SiO₂ and Al₂O₃, and a composite oxide of SiO₂ and Al₂O₃.

4. The catalytic apparatus according to Claim 2, wherein said component is a zeolite having a cracking capability, and the zeolite is at least one member which is selected from the group consisting of type Y zeolites.

5. The catalytic apparatus according to Claim 2, wherein said first catalyst further includes at least one catalyst ingredient which is selected from the group consisting of Pt, Rh, and Pd, and which is loaded on said catalyst support.

6. The catalytic apparatus according to Claim 5, wherein said catalyst ingredient is Pd, and is loaded on said catalyst support in an amount of from 0.01 to 5 grams with respect to 1 liter of said catalyst support.

7. The catalytic apparatus according to Claim 5, wherein said catalyst ingredient is at least one member selected from the group consisting of Pt and Rh, and is loaded on said catalyst support in an amount of from 0.01 to 5 grams with respect to 1 liter of said catalyst support.

8. The catalytic apparatus according to Claim 1, wherein said second catalyst includes a catalyst support formed of at least one component which is selected from the group consisting of SiO₂, Al₂O₃, TiO₂, ZrO₂, CeO₂, Fe₂O₃, and Fe₃O₄, and at least one catalyst ingredient which is loaded on the catalyst support, and which is selected from the group consisting of Pt, Rh, and Pd.

9. The catalytic apparatus according to Claim 8, wherein said catalyst ingredient is Pt, and is loaded on said catalyst support in an amount of from 0.01 to 5 grams with respect to 1 liter of said catalyst support.

10. The catalytic apparatus according to Claim 1, wherein said first catalyst and said second catalyst include a catalyst ingredient of substantially identical oxidizing activity, and said second catalyst includes the catalyst ingredient in an amount greater than said first catalyst.

11. The catalytic apparatus according to Claim 10, wherein said first catalyst further includes a first catalyst support, on which said catalyst ingredient is loaded, and said second catalyst further includes a second catalyst support, on which said catalyst ingredient is loaded.

12. The catalytic apparatus according to Claim 11, wherein a loading amount of said catalyst ingredient is controlled in a range of from 0.01 to 5 grams with respect to 1 liter of said first catalyst support, and a loading amount of said catalyst ingredient is controlled in a rage of from 0.1 to 5 grams with respect to 1 liter of said second catalyst support.

13. The catalytic apparatus according to Claim 11, wherein said first catalyst includes a first catalyst support formed of at least one component which is selected from the group consisting of SiO₂, a mixture of SiO₂ and Al₂O₃, a composite oxide of SiO₂ and Al₂O₃, a mixture of SiO₂ and MgO, a composite oxide of SiO₂ and MgO, a zeolite having a cracking capability, Fe₂O₃, Fe₃O₄, CeO₂, a mixture of CeO₂ and ZrO₂, a composite oxide of CeO₂ and ZrO₂, an SO₄-ZrO₂ super strong acid, a WO₃-ZrO₂ super strong acid, a WO₃-SnO₂ super strong acid, a WO₃-TiO₂ super strong acid, a WO₃-Fe₂O₃ super strong acid, and an MoO₃-ZrO₂ super strong acid.

14. The catalytic apparatus according to Claim 11, wherein said second catalyst includes a second support formed of at least one component which is selected from the group consisting of SiO₂, Al₂O₃, TiO₂, ZrO₂, CeO₂, Fe₂O₃, and Fe₃O₄.

15. The catalytic apparatus according to Claim 1, wherein said first catalyst is disposed immediately below a exhaust manifold of a diesel engine, and said second catalyst is disposed within a downstream area where the temperature of the exhaust gas is held in such a range that permits said second catalyst to exhibit the oxidizing activity.
